# EUROPEAN PATENT SPECIFICATION

(11) **EP 0 963 275 B1**
(45) Date of publication and mention of the grant of the patent: **09.04.2003**
(21) Application number: 98962770.8
(22) Date of filing: 04.12.1998
(51) Int. Cl.: B23P 19/06, B25B 23/04

(54) **MOBILE AUTOMATIC MACHINE FOR FASTENING OF FASTENERS**
FAHRBARE AUTOMATISCHE MASCHINE ZUR BEFESTIGUNG VON BEFESTIGUNGSELEMENTEN
MACHINE AUTOMATIQUE MOBILE POUR FIXER DES ELEMENTS DE FIXATION

(30) Priority: 18.12.1997 SE 9704727
(43) Date of publication of application: 15.12.1999
(73) Proprietor: Söderlund, R, 692 72 Kumla (SE)
(72) Inventor: Söderlund, R, 692 72 Kumla (SE)
(74) Representative: Lautmann, Kurt O.
(86) International application number: SE9802217
(87) International publication number: WO99033606

(56) References cited:
- DE-A1- 19 528 282
- DK-B- 152 696
- US-A- 4 915 549
- PATENT ABSTRACTS OF JAPAN, Vol. 11, No. 392, (M-653); & JP 62157737 A (SEIATSU K.K.) 13 July 1987.

## Description

### General description

The present invention relates to a mobile automatic machine for fastening of fasteners, which machine may, for example, be attached by vacuum to a work object, primarily for the purpose of securing fasteners in panels, and is further designed to feed fasteners automatically in such manner that several fasteners can be inserted and fastened simultaneously. When using this automatic machine, the fasteners are inserted at intervals along a linear unit (1) at a preset spacing, which spacing can, however, be altered easily along the length of the unit.

### Background to invention

Panels are usually fastened together by means of screws supplied on a belt or picked up manually, and tightened with hand-held, power screwdrivers, a procedure which places a strain on the arms and shoulders. This is also a monotonous and time-consuming task since the panels are usually joined by about 10-15 screws per square metre, and large numbers of screws must be installed in structures built from panels.

### Figures

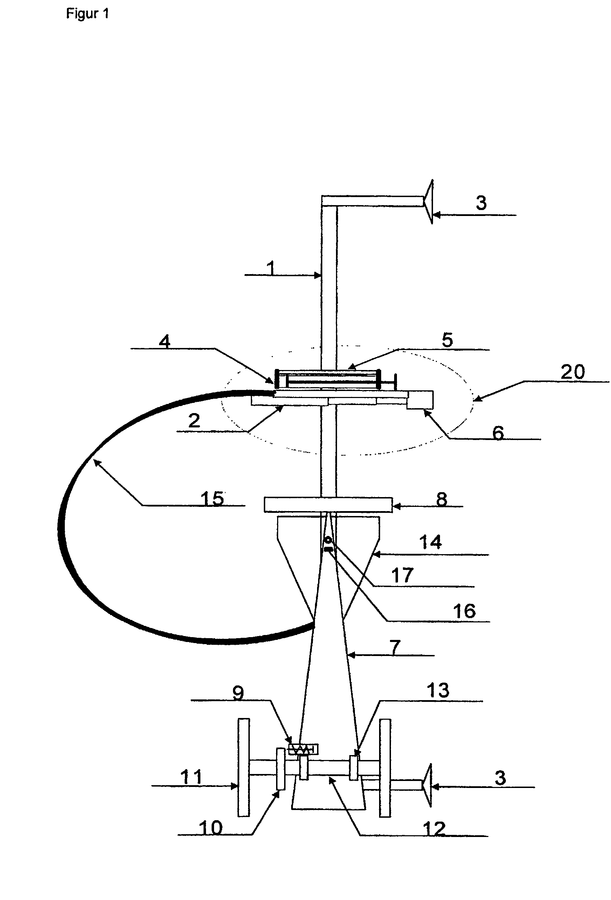

Fig. 1 shows the automatic fastening device from the operator's side.

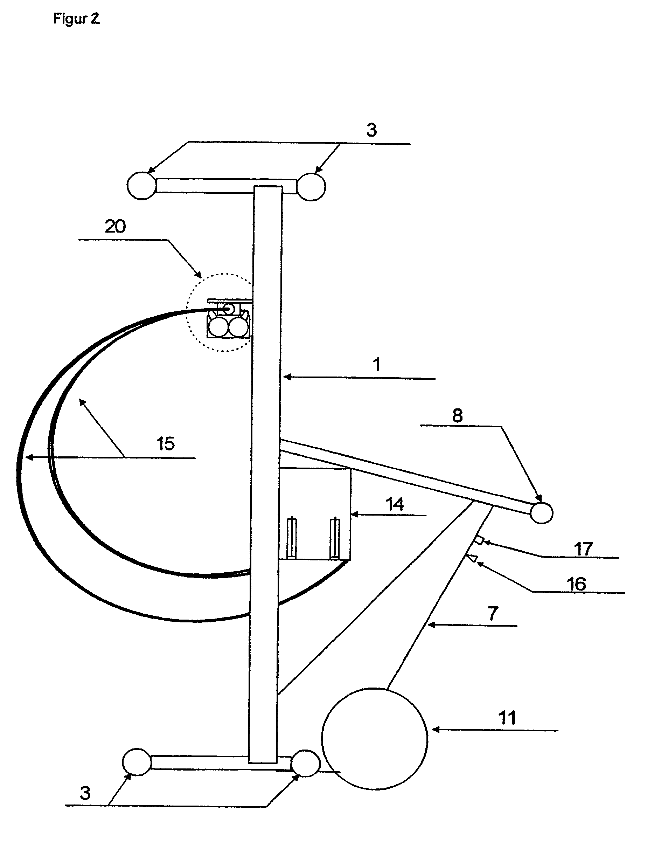

Fig. 2 shows the automatic fastening device from the work object side.

### Description

The reference numbers stated on the figures indicate the following: Linear unit 1, motors 2, suction cups 3, compressed air cylinder 4, work head holder 5, fastener holder 6, control box 7, handle 8, compressed air cylinder 9, counter-stop 10, wheels 11, axle 12, bearing 13, fastener arranger 14, hoses 15, starter button 16, pushbutton 17 and work head 20.

Designated 1 on the figures, the linear unit is the part which can traverse the work head 20 between it's (the linear unit's) end positions when installing the fasteners. When starter button 16 is operated, the fastener arranger 14 is started and the cylinder 9 presses the automatic fastening device against the panel. The ejector then begins to develop vacuum in the suction cups which hold the automatic fastening device in contact with the work object. Pushbutton 17 is activated when the correct vacuum has been reached and only then can screw tightening be commenced. At this point, the screws shall already be located in the fastener holder 6, which are pressed against the panel by the compressed air cylinder 4, the motors 2 starting when the correct contact pressure with the panel has been reached. The screws are screwed in to a predetermined depth. When the screws have been tightened to the correct depth, the work head holder 5 is reversed while new screws are blown into the fastener holder 6 and the work head 20 is traversed along the linear unit 1 to the next position. When the work head 20 has reached the last position, new screws are blown into the fastener holder 6 and the work head 20 is traversed to the other end of the linear unit 1 in readiness for the next cycle.

### Purpose of invention

The main purpose of the present invention is to install and tighten panel screws, primarily as part of building and installation works, and to reduce the occupational injuries which occur when the task is carried out using hand-held tools, also to save time by installing a number of screws simultaneously. In addition, other working tasks can be carried out while changing the working head (20).

## Claims

1. A mobile automatic machine for fastening of fasteners, comprising an automatic fastening device (3,9) for attaching the machine to a work object and retaining in contact therewith by vacuum for the purpose of installing fasteners, a fastener arranger (14), which blows fasteners through hoses (15) to fastener holder (6), where motors (2) tighten the fasteners to the correct depth, and a work head (20) which can be traversed linearly at repeatable intervals, the spacing of which can be altered easily, or at a uniform speed along the entire length of a linear unit (1).

2. A mobile automatic machine according to claim 1, **characterised in that** the work head (20) can be equipped with other tools, for example for drilling or milling.

## Patentansprüche

1. Eine bewegliche bzw. mobile Automatikmaschine zur Befestigung von Befestigungseinrichtungen, mit einer automatischen Befestigungsvorrichtung (3,9), zum Anbringen der Maschine an einem Arbeitsobjekt und zum Halten der Maschine in einer Berührung mit dem Arbeitsobjekt durch Vakuum, zum Zwecke der Installierung von Befestigungseinrichtungen, mit einer Anordnung (14) zur Anordnung der Befestigungseinrichtungen, welche Anordnung Befestigungseinrichtungen durch einen Schlauch oder eine Rohrleitung (15) zu einem Halter (6) für die Befestigungseinrichtungen bläst, wo Motoren (2) die Befestigungseinrichtungen auf der korrekten Tiefe halten, bzw. festziehen oder enger zusammenziehen, und mit einem Arbeitskopf (20), welcher linear in Längs- oder Querrichtung verfahrbar ist, zu wiederholbaren Zeitintervallen, wobei der Abstand desselben einfach verändert werden kann, oder mit einer gleichförmigen Geschwindigkeit längs der gesamten Länge einer Lineareinheit (1) veränderbar ist.

2. Mobile Automatikmaschine nach Anspruch 1, **dadurch gekennzeichnet, daß** der Arbeitskopf (20) mit anderen Werkzeugen ausgerüstet werden kann, bzw. austattbar ist, z.B. zum Bohren oder Fräsen.

## Revendications

1. Machine automatique mobile pour la fixation d'attaches, comprenant un dispositif de fixation automatique (3, 9) pour attacher la machine à une pièce de fabrication et pour la maintenir en contact avec celle-ci au moyen du vide dans le but d'installer des attaches, un agenceur d'attaches (14) qui souffle les attaches à travers des tuyaux flexibles (15) jusqu'au porte-attaches (6) où des moteurs (2) serrent les attaches à la profondeur correcte, et une tête porte-outils (20) pouvant être traversée linéairement à des intervalles répétitifs dont l'espacement est facilement modifiable, ou à une vitesse uniforme le long de toute la longueur d'une unité linéaire (1).

2. Machine automatique mobile selon la revendication 1, **caractérisée en ce que** la tête porte-outils (20) peut être équipée d'autres outils, pour le perçage ou pour le fraisage, par exemple.
